# EUROPEAN PATENT APPLICATION

(11) **EP 1 776 941 A2**
(43) Date of publication of application: **25.04.2007**
(21) Application number: 06020806.3
(22) Date of filing: 04.10.2006
(51) Int. Cl.: A61G 3/06

(54) **Footboard for overcoming differences in height**

(30) Priority: 18.10.2005 IT TO20050740
(71) Applicant: Piero&Gianni Cooperativa Sociale O.N.L.U.S., 10141 Torino (IT)
(72) Inventor: Del Proposto, Fabio, 10141 Torino (IT)
(74) Representative: Garavelli, Paolo

(57) **Abstract**

A footboard (1) is described adapted to allow overcoming differences in height through a chute-type arrangement; such footboard (1) is equipped with at least one supporting member (3) adapted to be housed below the footboard (1) in its rest position, and adapted to go out of and to support the footboard (1) in its operating position; and with first gripping means (5) of the footboard (1) adapted to allow lifting the footboard (1) in order to take it from its rest position to its operating position, and adapted to allow lowering the footboard (1) to take it from its operating position to its rest position. Second gripping means (9) and a side structure (14) can also be provided.

## Description

The present invention refers to a footboard for overcoming differences in height, in particular adapted to allow disabled people equipped with wheelchair to access to places located at a certain height with respect to the ground.

Different types of footboards, usually made of wood, are known in the art, and are placed, for example next to stairs, and arranged as a chute for connecting the roadbed to the top of the stair itself, in order to allow an easier transit, for example to move loads or to be used by people with a wheelchair.

These footboards, however, are not wholly satisfactory, since they usually are common planks abutted in precarious conditions, or are fixed and therefore they impair the circulation and have problems when it is necessary, for example, to close a shop and one must move them, or leave them on the road with its related obstacle to circulation and the risk of theft.

Object of the present invention is solving the above prior art problems, by providing a footboard that can be easily installed, can be as well easily removed and is composed in order to allow its easy transport; such footboard is preferably made of strong plastic material.

The above and other objects and advantages of the invention, as will appear from the following description, are obtained with a footboard as claimed in claim 1. Preferred embodiments and non-trivial variations of the present invention are the subject matter of the dependent claims.

The present invention will be better described by some preferred embodiment thereof, provided as a non-limiting example, with reference to the enclosed drawings, in which:
- Figure 1 is a perspective view of an embodiment of the footboard according to the present invention in its rest position;
- Figure 2 is a similar view to Figure 1, but with the footboard in its operating position;

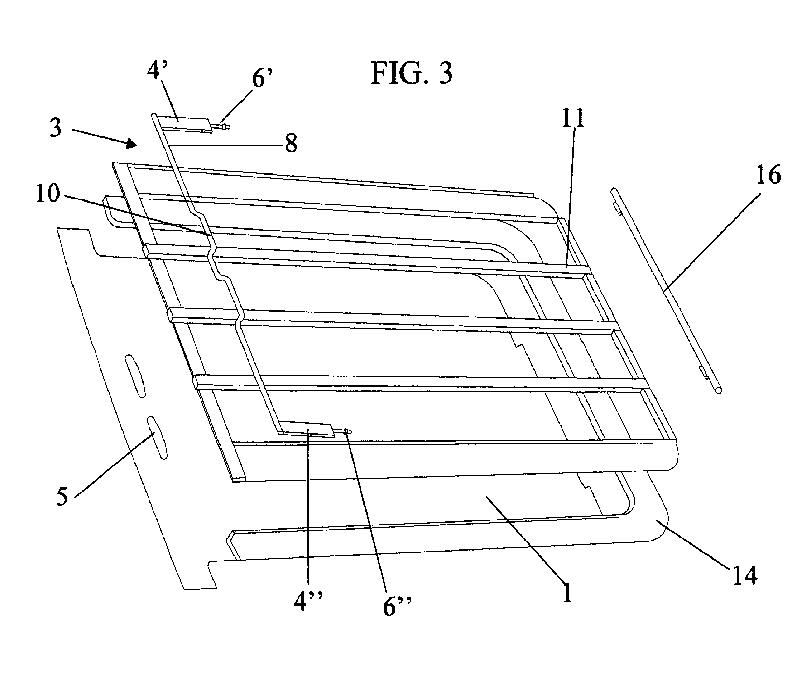

- Figure 3 is an exploded bottom perspective view that shows the main parts composing the footboard of Fig. 1;

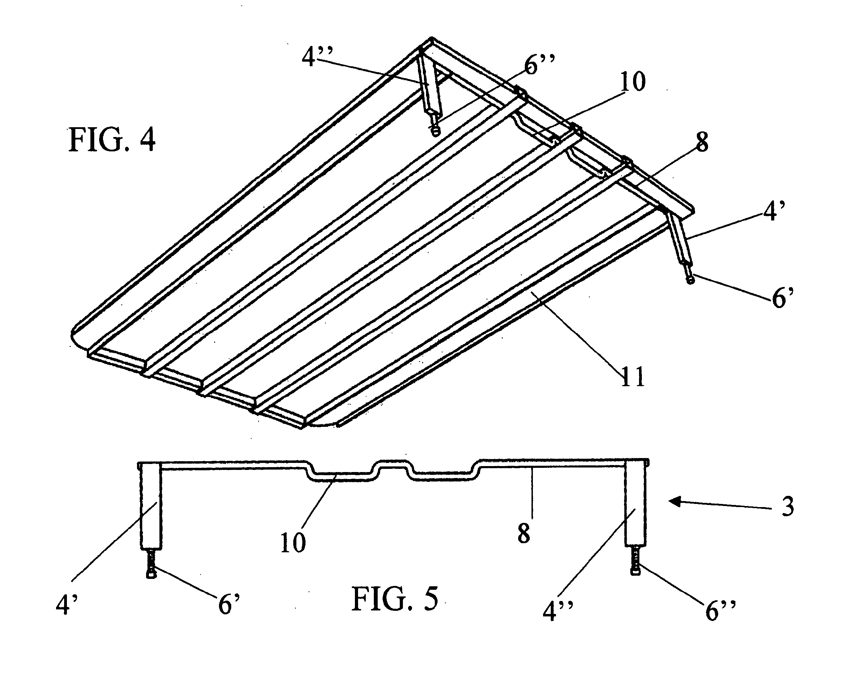

- Figure 4 is a perspective view of the supporting structure for the footboard in Fig. 1;
- Figure 5 is a front view of a supporting member for the footboard of Fig. 1;
- Figure 6 is a bottom perspective view of a second possible embodiment of the footboard of the present invention;
- Figure 7 is a perspective view of the supporting structure of the footboard of Fig. 6; and
- Figure 8 is a side view of the structure in Fig. 7.

With reference to the Figures, a preferred embodiment of the footboard of the present invention is shown and described. It will be readily obvious that numerous variations and modifications (for example related to shape, sizes, arrangements and parts with equivalent functionality) can be made to the invention without departing from the scope of the invention as claimed in the enclosed claims.

With reference to the Figures, the footboard 1 of the present invention is adapted to allow overcoming differences in height through a chute-like arrangement. Such footboard 1 is adapted to assume an operating position in which it communicates the plane on which it rests (usually round or roadbed) with the top of the difference in height to be overcome (usually a step or the entry in a shop or a building), and is adapted to assume a rest position in which it completely rests on its bearing plane.

In particular, the footboard 1 substantially comprises:
- at least one supporting member 3 adapted to be housed below the footboard 1 in its rest position, and adapted to go out of and to support the footboard 1 in its operating position; and
- first gripping means 5 of the footboard 1 adapted to allow lifting the footboard 1 in order to take it from its rest position to its operating position, and adapted to allow lowering the footboard 1 to take it from its operating position to its rest position.

The above footboard 1 can further be equipped with second gripping means 9, in which such second gripping means 9 are adapted to allow further gripping the footboard 1 for its operating and transport phases.

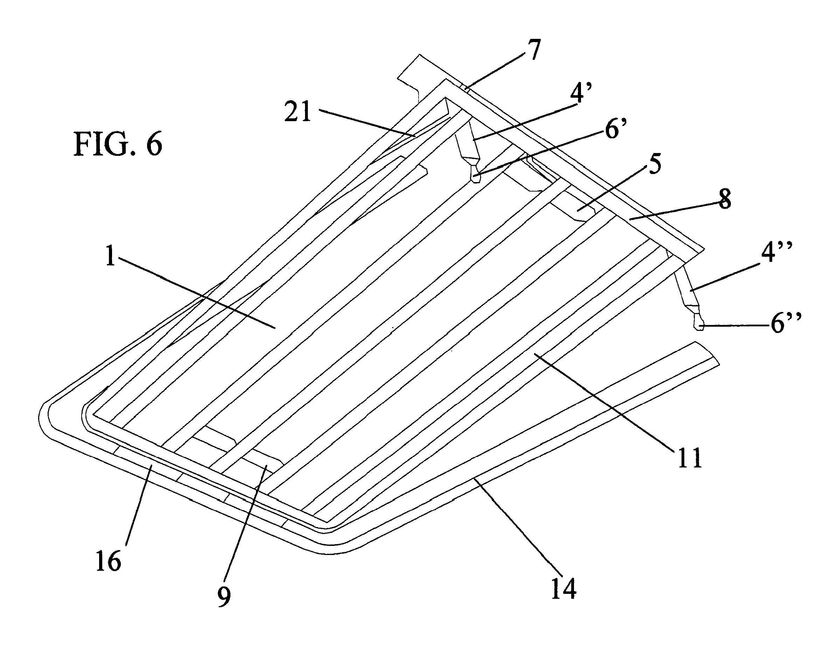

Moreover, the above described footboard 1 can be equipped with at least one (and preferably two or more) transport member (that is shown in Fig. 6 with reference 7), and the first gripping means 5 and/or the second gripping means 9 are adapted to allow gripping the footboard 1 to be able to move it through the transport member 7. It is obviously possible to arrange the transport members 7 in any configuration, number and arrangement on any one of the footboard sides, always performing the function of facilitating its transport.

According to the particular embodiment shown, the transport members 7 are small wheels, but could also be small cylinders or other rolling members, adapted to allow easily sliding the footboard 1 when it is necessary to transport it from its storage place to its use place and vice versa.

Always according to what is shown in a non-limiting ways, the supporting members 3 are composed of two elongated ends 4', 4" from which respective small feet 6', 6'' go out: such ends 4', 4'' are mutually connected through a shaped control bar 8.

Moreover, the small feet 6', 6'' are adjustable in height, in order to be able to adapt the footboard 1 to different differences in height with respect to its bearing plane.

According to what is shown, the supporting members 3 are connected to an end of the footboard 1 that will be joined to the top of the difference in height to be overcome; the supporting members 3 are driven by at least one spring 20 and are adapted to snap in their operating position, when the footboard 1 is lifted, in order to assume a final operating orientation that is perpendicular with respect to its bearing plane.

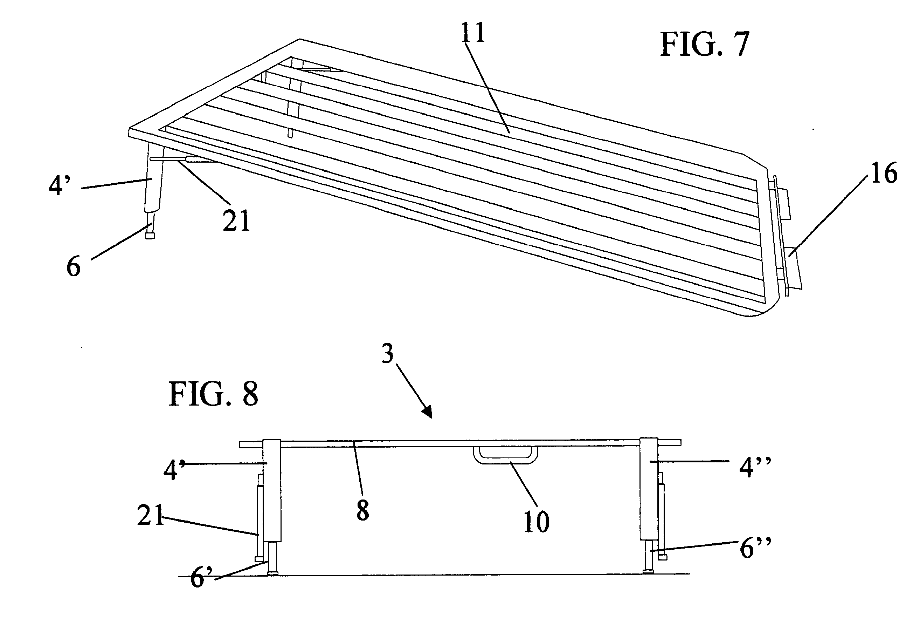

In the second preferred embodiment shown in Fig. 6 to 8, the spring 20 is replaced by an adjustable braked support 21, commonly realised through a lever equipped with a small pneumatic piston, that drives the supporting members in their opening and closing positions.

To avoid dangers or injuries for the user, the footboard 1 further preferably comprises a safety device (not shown) adapted to block the supporting members 3 when they are in their rest position, preventing the supporting members 3, that are driven by the spring 20, from undesiredly snapping in their operating position.

In particular, such safety device could be composed of a plate driven by a small lever, in which such plate is adapted to engage the supporting members 3 in the closing position. Obviously, other types of safety device, with equivalent functionality and purpose, could be provided.

According to what is shown, the supporting members 3 are adapted to be pushed to open and close by gripping shapes 10 of the control bar 8, accessible through the first gripping means 5, in a simple way through the same hands of the user that grips the footboard to activate it.

The inventive footboard 1 is preferably made of strong plastic material, in order to highly reduce its height and facilitate its use by any operator. In order to further strengthen the footboard 1, especially in applications where it is required that it is adapted to support a load even equal to 400 kg, the footboard 1 can further comprise a supporting structure 11 adapted to allow heavy load to pass over it.

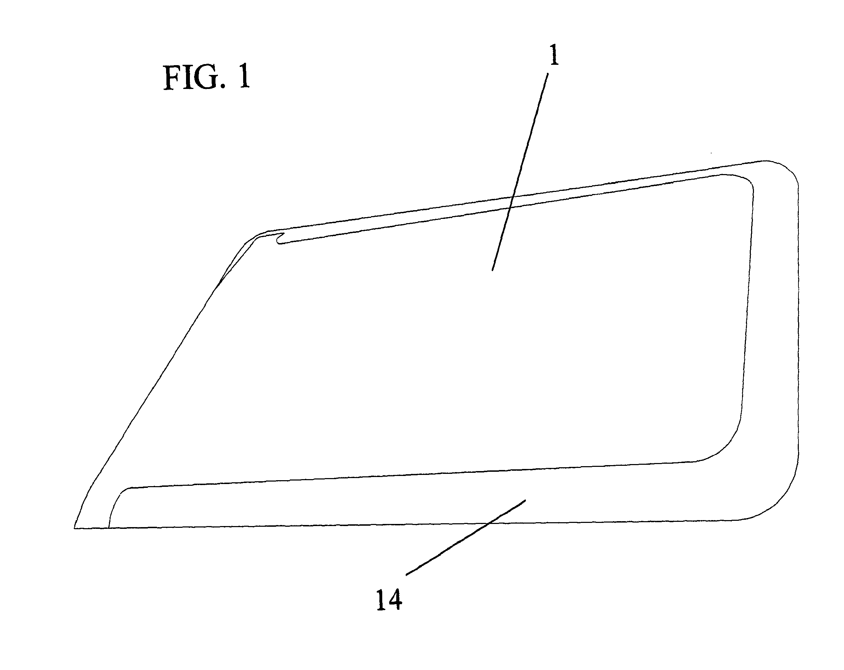

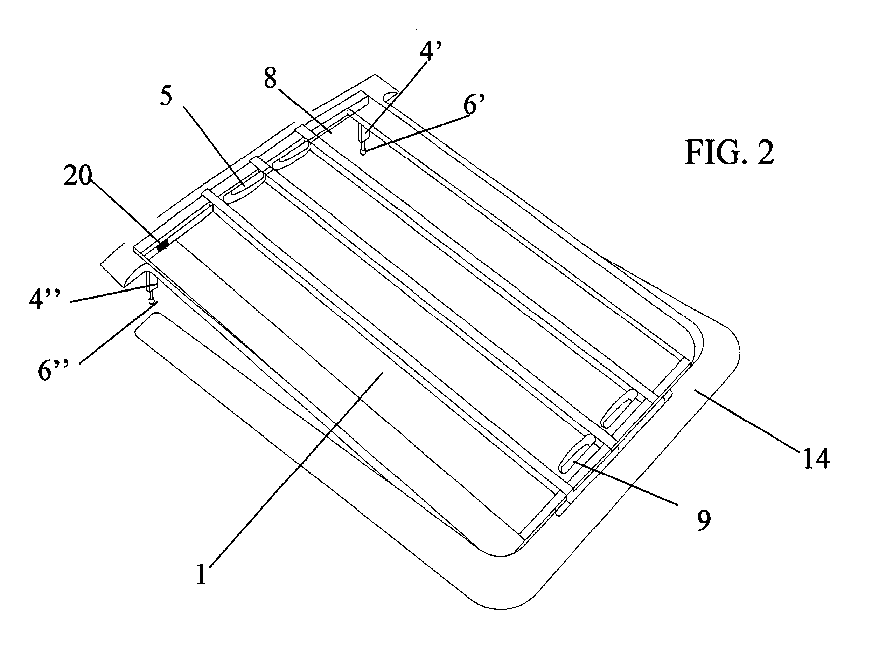

The above described footboard 1 is already fully operating for performing the inventive functions and objects. According to a possible application variation, that is shown in the Figures, the footboard 1 can further be equipped with a side structure 14 adapted to be placed around at least one side of the footboard 1 (for example through the hinge means 16). Such side structure 14 is equipped with joining means (not shown, but for example composed of elongated and movable rods that are connected to the side structure 14 and that penetrate in a flank of the footboard 1) to the footboard 1, in order to be able to make it integral with the footboard 1 when it is necessary to transport it and in any case when the footboard 1 is located in a non-operating position (such as for example shown in Fig. 1). The operating position in which instead the footboard 1 is detached from the side structure 14 is shown in Fig. 2.

Such side structure 14 can also be equipped with third gripping means (here not shown) adapted to allow grasping and lifting the footboard 1 during its transport, in this case not directly through the footboard 1, but indirectly through the side structure 14 and its gripping means.

According to the most common and immediate embodiment, as shown, the side structure 14 is placed around three sides of the footboard 1, realising therewith a final, compact and aesthetically pleasing configuration.

Still according to what is shown, always absolutely in a non-limiting way, the first 5, the second 9 and the third gripping means can be composed of at least one (and preferably two, one for each user hand, or a higher number) opening obtained in the footboard 1 and/or in its side structure 14.

As a not shown alternative, the first 5, the second 9 and the third gripping means can be composed of handles adapted to be bent, in a non-operating step, inside the footboard 1. Obviously, numerous other types of gripping means with equivalent functionality can also be realised.

## Claims

1. Footboard (1) adapted to allow overcoming differences in height through a chute-type arrangement, said footboard (1) being adapted to assume an operating position in which it communicates the plane on which it is rested with the top of the difference in height to be overcome, and being adapted to assume a rest position in which it completely abuts onto its bearing plane, **characterised in that** it is equipped with:
- at least one supporting member (3) adapted to be housed below said footboard (1) in its rest position, and adapted to go out of and to support said footboard (1) in its operating position; and
- first gripping means (5) of said footboard (1) adapted to allow lifting said footboard (1) in order to take it from its rest position to its operating position, and adapted to allow lowering said footboard (1) in order to take it from its operating position to its rest position.

2. Footboard (1) according to claim 1, **characterised in that** it is further equipped with second gripping means (9), said second gripping means (9) being adapted to allow a further gripping of said footboard (1) for its operating and transport steps.

3. Footboard (1) according to claim 2, **characterised in that** it is further equipped with at least one transport member (7), said first gripping means (5) and/or said second gripping means (9) being adapted to allow gripping said footboard (1) in order to be able to move it through said transport member (7).

4. Footboard (1) according to claim 3, **characterised in that** said transport members (7) are two.

5. Footboard (1) according to claim 3 or 4, **characterised in that** said transport members (7) are small wheels.

6. Footboard (1) according to claim 3, 4 or 5, **characterised in that** said transport members (7) are placed in any one or more of the sides of said footboard (1).

7. Footboard (1) according to claim 1, **characterised in that** said supporting members (3) are composed of two elongated ends (4', 4'') from which respective small feet (6', 6'') project, said ends (4', 4'') being mutually connected through a shaped control bar (8).

8. Footboard (1) according to claim 7, **characterised in that** said small feet (6', 6") are adjustable in their height, to be able to adapt the footboard (1) to different differences in height with respect to the bearing plane.

9. Footboard (1) according to claim 1, 7, or 8, **characterised in that** said supporting members (3) are connected to an end of said footboard (1) that will be joined to the top of the difference in height to be overcome, said supporting members (3) being driven by a spring (20) and being adapted to snap into their operating position, when said footboard (1) is lifted, in order to assume a final operating orientation that is perpendicular with respect to the bearing plane.

10. Footboard (1) according to claim 1, 7, or 8, **characterised in that** said supporting members (3) are connected to an end of said footboard (1) that will be joined to the top of the difference in height to be overcome, said supporting members (3) being driven by an adjustable braked support (21) and being adapted to be pushed by this latter one into their operating position, when said footboard (1) is lifted, in order to assume a final operating orientation that is perpendicular wth respect to the bearing plane.

11. Footboard (1) according to any one of the previous claims, **characterised in that** said footboard (1) further comprises a safety device adapted to block said supporting members (3) when they are in their rest position, preventing said supporting members (3) driven by the spring (20) from undesiredly snapping into their operating position.

12. Footboard (1) according to claim 11, **characterised in that** said safety device is composed of a plate driven by a small lever, said plate being adapted to engage said supporting members (3) in the closing position.

13. Footboard (1) according to any one of the previous claims, **characterised in that** said supporting members (3) are adapted to be pushed to open and close by gripping shapes (10) of said control bar (8), accessible through said first gripping means (5).

14. Footboard (1) according to any one of the previous claims, **characterised in that** said footboard (1) further comprises a supporting structure (11) adapted to allow heavy loads to pass over it.

15. Footboard (1) according to any one of the previous claims, **characterised in that** said footboard (1) is further equipped with a side structure (14) adapted to be placed around at least one side of said footboard (1) through hinge means (16), said side structure (14) being equipped with joining means to said footboard (1) and being equipped with third gripping means adapted to allow grasping and lifting said footboard (1) during its transport.

16. Footboard (1) according to claim 15, **characterised in that** said side structure (14) is placed around three sides of said footboard (1).

17. Footboard (1) according to any one of the previous claims, **characterised in that** said first (5), second (9) and third gripping means are composed of at least one opening obtained in said footboard (1) and/or said side structure (14).

18. Footboard (1) according to claim 17, **characterised in that** said openings (5, 9) are two.

19. Footboard (1) according to any one of claims 1 to 16, **characterised in that** said first (5), second (9) and third gripping means are composed of handles adapted to be bent, in a non-operating step, inside said footboard (1).
